# EUROPEAN PATENT SPECIFICATION

(11) **EP 2 969 332 B1**
(45) Date of publication and mention of the grant of the patent: **07.10.2020**
(21) Application number: 14771125.3
(22) Date of filing: 12.03.2014
(51) Int. Cl.: B23D 45/04, B23D 47/12

(54) **MITER SAW WITH BRUSHLESS DRIVE MOTOR**
GEHRUNGSSÄGE MIT BÜRSTENLOSEM ANTRIEBSMOTOR
SCIE À ONGLET DOTÉE D'UN MOTEUR D'ENTRAÎNEMENT SANS BALAIS

(30) Priority: 15.03.2013 US 201361787115 P
(43) Date of publication of application: 20.01.2016
(73) Proprietor: Robert Bosch GmbH, 70442 Stuttgart (DE)
(72) Inventor: WIKER, Juergen, Schaumberg, IL 60173 (US); DAMMERTZ, Ralph, Palatine, IL 60067 (US); KOEGEL, Jan, Oak Park, IL 60302 (US)
(86) International application number: PCT/US2014/024414
(87) International publication number: WO 2014/150859

(56) References cited:
- EP-A1- 0 570 904
- EP-A1- 1 604 764
- EP-A1- 1 604 764
- EP-A1- 2 204 252
- EP-A2- 0 407 204
- JP-A- H11 300 520
- JP-A- 2010 274 392
- US-A1- 2003 089 511
- US-A1- 2004 017 119
- US-A1- 2005 056 128
- US-A1- 2006 016 310
- US-A1- 2008 289 843
- US-A1- 2011 107 892

## Description

### Field of the Disclosure

The present disclosure relates to a miter saw having a drive mechanism for providing power to the miter saw.

### Background

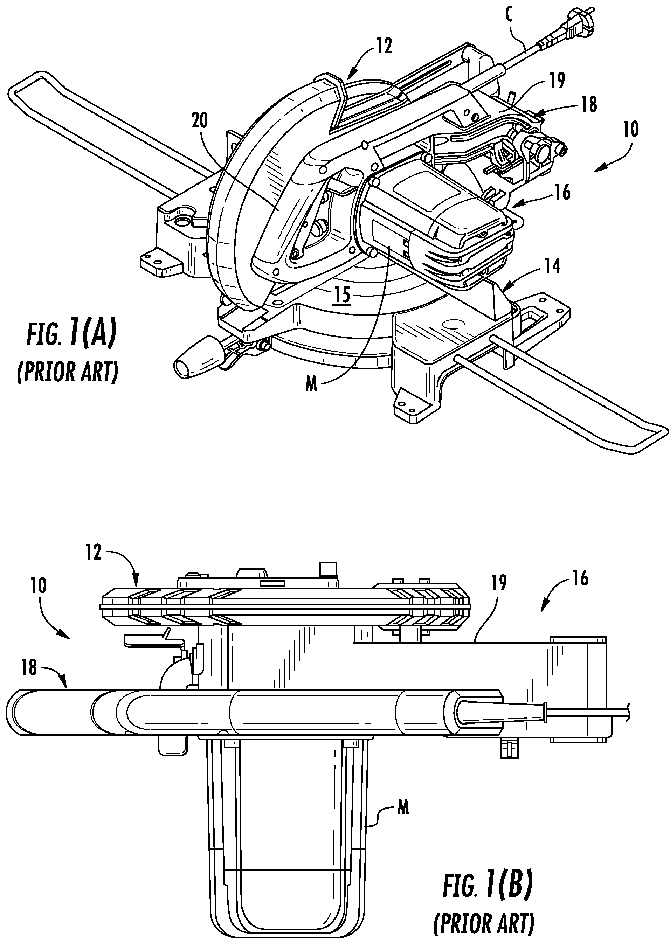

Many types of power tools are available that are portable or easy to deploy at a job site, and that are ergonomically convenient for the operator. Such power tools may be a planer, miter saw, bevel saw, reciprocating saw, jig saw, compound saw, vertical saw, band saw, router, circular saw, or the like. A common feature among these types of tools is that the drive motor and driven tool are carried by the same structure. One example is the miter saw **10** shown in **FIGS. 1(a)****-(b).** The miter saw **10** includes a saw assembly **12** that is supported on a base assembly **14** by a bevel mount **16.** The bevel mount for this tool is configured to allow the saw assembly to pivot up and down relative to the base assembly in order to perform the cut. In addition, the bevel mount **16** is configured to allow the saw assembly to be oriented at a user-defined miter angle and may also be configured to allow the saw assembly to be positioned at a non-perpendicular angle relative to the work surface **15** of the base assembly.
The saw assembly **12** is connected to the bevel mount **16** by an arm assembly **18.** The arm assembly includes a housing **19** that supports the motor **M** and may be provided with
handle assembly **20** that can be grasped by the operator to control the movement of the saw assembly when performing a cut. The housing **19** of the arm assembly contains the electrical and/or electronic components of the power tool **10**, with electrical power fed to the motor **M** and electrical components by a power cord **C.** In the miter saw of **FIGS. 1(a)****-(b),** as well as in many other power tools, the motor **M** is supported on the rotational axis of the tool, in this case a rotary saw blade. In many instances, the saw blade is mounted directly on the output shaft of the motor so that the blade speed matches the motor speed. In other power tools, a gearing arrangement may be provided to step up or step down the motor speed for driving the tool.

For most power tools, including portable or bench top power tools, the drive motor **M** has traditionally been a universal AC motor because these types of motors are capable of the rotational speeds and torques necessary for an effective power tool. However, the benefits of the universal motor are countered by the bulkiness of the motor. As can best be seen in **FIG. 1(b)****,** the motor **M** projects significantly outward from the arm assembly **18**, in many cases doubling the overall width of the power tool **10.** In addition to the bulkiness, the size and weight of the traditional motor affects the moment of inertia of the power tool. These attributes of the universal AC motor require special design considerations to make the power tool as ergonomic and easy to use as possible, while allowing the operator to make an accurate and efficient cut in a workpiece.

Although the traditional AC motor driven power tool has been an able workhorse for the tradesman and DIYer, there is still a need to improve the physical characteristics of the power tool to improve its ergonomics and ease of use. US2011107892A1 discloses a miter saw comprising: a base assembly; a saw assembly including a saw blade having a drive shaft wherein the saw assembly is supported on the base assembly by a bevel mount; an arm assembly connecting the saw assembly to the bevel mount, the arm assembly including an arm housing and a handle that can be grasped by an operator to control the movement of the saw assembly when performing a cut; a drive motor housing projecting inwardly towards the drive shaft, wherein the arm assembly is arranged directly above and in line with saw assembly with the drive motor housing laterally offset from the arm housing; a brushless DC BLDC motor having an output shaft and being mounted within said motor housing and a drive train mounted within said motor housing wherein said drive train operably connects the output shaft of the BLDC motor to said drive shaft, wherein the drive train includes a pinion gear mounted to the output shaft of the BLDC motor that meshes with a gear, and wherein the gear meshes with a spur gear engaged to the drive shaft of the saw blade. US 2008/289843 A1 discloses an apparatus having a main body portion and an articulating arm. The main body has a power source, a drive motor, and a drive shaft. The drive shaft extends into the articulating arm which has a first section rotatable about the drive shaft. The articulating arm also has a second section which is seated on a first transversely aligned drive shaft interoperating with the drive shaft itself. The first transversely aligned drive shaft transmits rotational work to a second transversely aligned drive shaft which supports a third section. A third section interoperates with a spindle section which receives the rotational work from the second transversely aligned drive shaft to accomplish rotational work on the securing element.

### Summary of the Disclosure

According to the invention, a miter saw defined by the features of claim 1 is provided. Further preferred embodiments are defined by the features of dependent claims 2-4.

### Description of the Figures

**FIGS. 1(a)****-(b)** are perspective and top views of a conventional power tool, in particular a dual bevel miter saw.
**FIG. 2(a)** is a schematic representation of drive train for a power tool, such as the power tool shown in **FIGS. 1(a)****-(b),** with the drive train incorporating a brushless motor.
**FIGS. 2(b)****-(c)** are perspective and top views of a power tool incorporating the drive train shown in **FIG. 2(a)****.**
**FIG. 3(a)** is a schematic representation of drive train for a power tool, such as the power tool shown in **FIGS. 1(a)****-(b),** with the drive train incorporating a brushless motor.
**FIGS. 3(b)****-(c)** are perspective and top views of a power tool incorporating the drive train shown in **FIG. 3(a)****.**
**FIG. 4(a)** is a schematic representation of drive train for a power tool, such as the power tool shown in **FIGS. 1(a)****-(b),** with the drive train incorporating a brushless motor.
**FIGS. 4(b)****-(c)** are perspective and top views of a power tool incorporating the drive train shown in **FIG. 4(a)****.**
**FIG. 5(a)** is a schematic representation of drive train for a power tool, such as the power tool shown in **FIGS. 1(a)****-(b),** with the drive train incorporating a brushless motor.
**FIGS. 5(b)** is a top view of a power tool incorporating the drive train shown in **FIG. 5(a)****.**
**FIG. 6(a)** is a schematic representation of drive train for a power tool, such as the power tool shown in **FIGS. 1(a)****-(b),** with the drive train incorporating a brushless motor.
**FIGS. 6(b)****-(c)** are perspective and top views of a power tool incorporating the drive train shown in **FIG. 6(a)****.**
**FIG. 7(a)** is a schematic representation of drive train for a power tool, such as the power tool shown in **FIGS. 1(a)****-(b),** with the drive train incorporating a brushless motor.
**FIGS. 7(b)****-(c)** are perspective and top views of a power tool incorporating the drive train shown in **FIG. 7(a)****.**
**FIG. 8(a)** is a schematic representation of drive train of a miter saw according to the invention, with the drive train incorporating a brushless motor.
**FIGS. 8(b)****-(c)** are side and top views of a miter saw according to the invention, and incorporating the drive train shown in **FIG. 8(a)****.**
**FIG. 9(a)** **is** a schematic representation of drive train for a power tool, such as the power tool shown in **FIGS. 1(a)****-(b),** with the drive train incorporating a brushless motor.
**FIGS. 9(b)****-(c)** are side and top views of a power tool incorporating the drive train shown in **FIG. 9(a)****.**
**FIG. 10(a)** is a schematic representation of drive train for a power tool, such as the power tool shown in **FIGS. 1(a)****-(b),** with the drive train incorporating a brushless motor.
**FIGS. 10(b)****-(c)** are side and top views of a power tool incorporating the drive train shown in **FIG. 10(a)****.**
**FIG. 11(a)** is a schematic representation of drive train for a power tool, such as the power tool shown in **FIGS. 1(a)****-(b),** with the drive train incorporating a brushless motor.
**FIGS. 11(b)****-(c)** are side and top views of a power tool incorporating the drive train shown in **FIG. 11(a)****.**
**FIGS. 12(a)****-(b)** are perspective and top views of another conventional power tool, in particular a sliding miter saw.
**FIG. 13(a)** is a schematic representation of a drive train for a power tool, such as the power tool shown in **FIGS. 12(a)****-(b),** with the drive train incorporating a brushless motor.
**FIG. 13(b)** is a top view of a power tool incorporating the drive train shown in **FIG. 13(a)****.**
**FIG. 14** is a schematic representation of the drive train of **FIG.** 13(a) modified to include a cooling fan.
**FIG. 15** depicts the use of an arm assembly modified to incorporate the BLDC motor and drive trains disclosed herein, used on different power tool base and mount configurations.
**FIG. 16** is a perspective view of a power tool having a modified handle configuration.
**FIG. 17(a)** is a schematic representation of a drive train for a power tool, such as the power tool shown in **FIGS. 12(a)****-(b)**, with the drive train incorporating a brushless motor and a flexible shaft.
**FIGS. 17(b)****-(c)** are side and top views of a power tool incorporating the drive train shown in **FIG. 17(a)****.**
**FIG. 17(d)** is side view of the power tool shown in **FIG. 17(b)** with the arm assembly in a retracted orientation in relation to the extended orientation of **FIG. 17(b)****.**
**FIG. 18** is a side view of a power tool, such as the tool shown in **FIG. 12(a)****-(b)**, incorporating a drive motor on the pivot axis of the arm assembly.
**FIG. 19** is a plan view of a fold flat power tool.

### Detailed Description

For the purposes of promoting an understanding of the principles of the invention, reference will now be made to the embodiments illustrated in the drawings and described in the following written specification. It is understood that no limitation to the scope of the invention is thereby intended, as far as any alterations and modifications to the illustrated embodiments fall within the scope of the appended claims.

Brushless DC motors or electronically commutated motors (referred to herein generally as BLDC motors) have been developed that can generate rotational speeds and torques comparable to the conventional universal AC motor. However, BLDC motors occupy a much smaller envelop than the universal motor, typically about half the length and occupying less than one-fourth the volume of a comparably powered universal motor. The much smaller envelop provided by the BLDC motor permits significant modifications to the overall size and shape of a power tool. In addition, the small size of the BLDC motor permits different indirect drive train arrangements, rather than the direct drive arrangement of the AC motor.

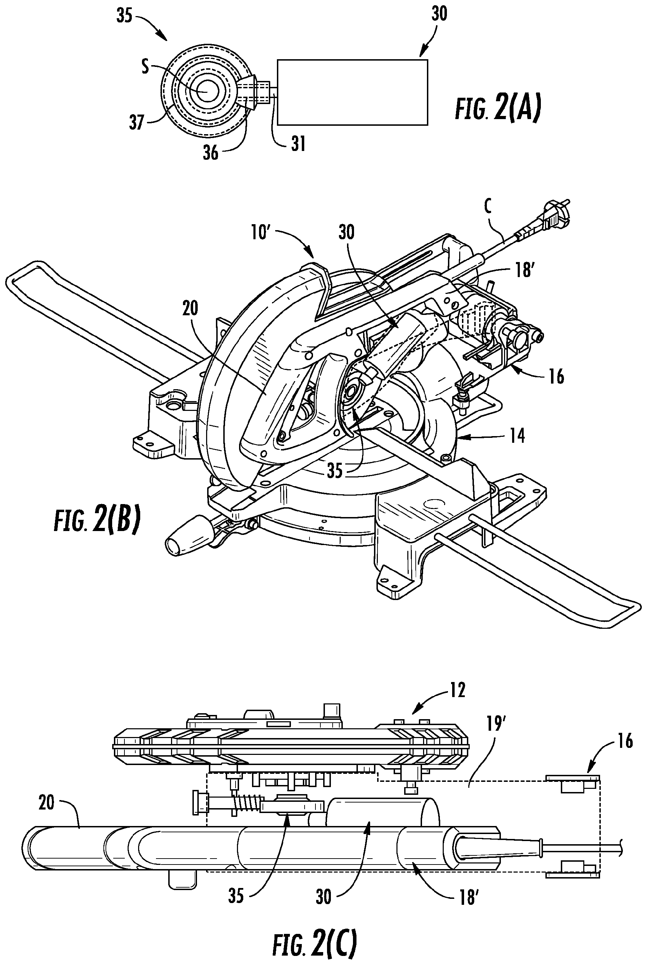

In one embodiment, a BLDC motor **30** is coupled to the drive shaft **S** of the working tool, such as the saw blade of the saw assembly **12** described above, by way of a gear train **35** shown in **FIG. 2(a)****.** The gear train includes a pinion gear **36** engaged to the output shaft **31** of the BLDC motor **30.** A bevel gear **37** is engaged to the drive shaft **S** of the saw blade and in meshed engagement with the pinion gear **36.** The gear train **35** thus provides a right angle drive for the saw blade, which means that the BLDC motor **30** does not need to project laterally outward from the arm assembly, as in prior power tools. Instead, the BLDC motor **30** and drive train **35** may be compactly contained within the housing **19'**of the arm assembly **18ⁱ,** as shown in **FIGS. 2(b)-****(c).** The control unit or circuit board for the BLDC motor may also be mounted within the housing **19ⁱ.**

The use of the bevel gear **37** allows the pinion gear **36** to be oriented at any location around the full circumference of the bevel gear. Thus, in order to minimize the size of the housing **19ⁱ** the BLDC motor **30** may be arranged at an angle within the housing, as depicted in **FIG. 2(b)****. The** impact on the overall size of the power tool **10ⁱ** relative to the traditional power **tool 10** can be appreciated by comparing the top views of **FIG. 1(b)** and **FIG. 2(c)****.** In particular, the absence of the conventional motor **M** significantly reduces the lateral extent of the tool, without requiring modification to the handle assembly **20** or bevel mount **16.** The drive ratio for the drive train may be adjusted according to the output speed of the BLDC motor and the speed requirements for the saw blade. In one specific embodiment, for a 4000 rpm saw blade speed, the gear train is configured for a gear ratio of 3.45:1 for a BLDC motor having a no-load operating speed of 1150 rpm.

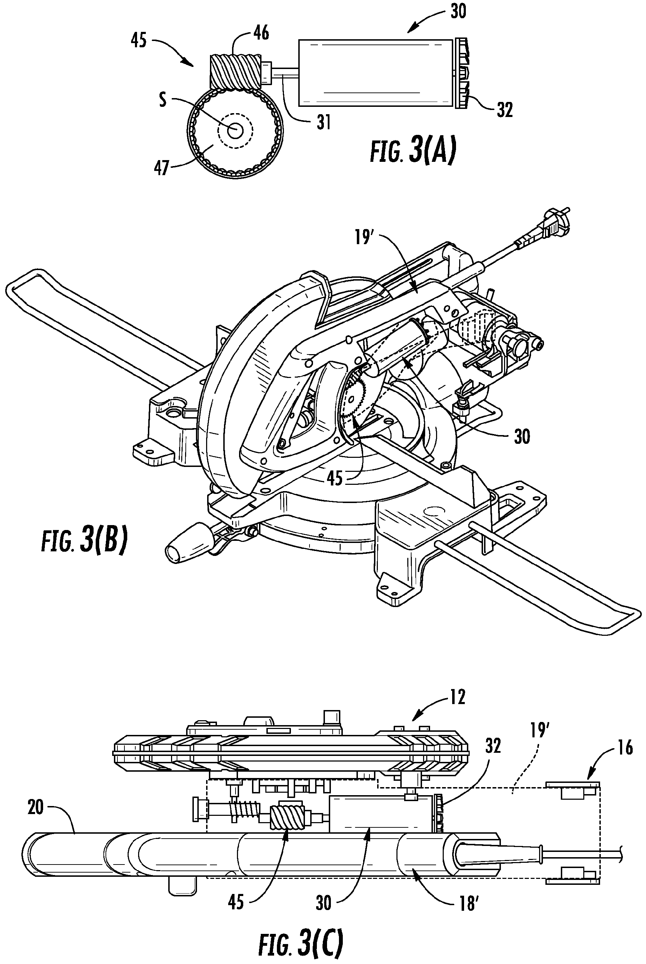

Another right angle drive gear train **45**, shown in **FIG. 3(a)**, a worm gear **46** is engaged to the output shaft **31** of a BLDC motor **30.** The worm gear meshes with a spur gear **47** that is engaged to the drive shaft **S** of the tool or saw blade. Like the pinion-bevel gear train **35**, the worm gear may mesh with the spur gear of the gear train **45** at any angular location around the circumference of the gear. Thus, the BLDC **30** and gear train **45** may be mounted with the modified housing **19ⁱ,** as illustrated in **FIGS. 3(b)****-(c).** One advantage of the worm gear **46** over the pinion gear **36** is that the worm gear may be positioned directly over the spur gear, as seen in **FIG. 3(c)**, rather than offset to the side like the pinion gear, as seen in **FIG. 2(c)****.** This attribute of the worm gear drive train allows the housing **19ⁱ** to be narrower, thereby further reducing the envelop of the power tool. As with the prior embodiment, the final ratio of the gear train **45** may be calibrated to match the BLDC motor speed with the desired shaft speed for the saw blade. In one specific embodiment, the worm gear **46** is a 4 start gear while the spur gear **47** is a 30 tooth gear for a final ratio of 7.5:1.

As shown in **FIG. 3(a)**, the BLDC motor **30** may be provided with a fan **32** at the rear face of the motor. The fan may be directly driven by the output shaft **31** of the motor in order to cool the motor and the interior of the housing **19ⁱ.** It should be appreciated that the fan may be incorporated into the BLDC motor in each embodiment disclosed herein.

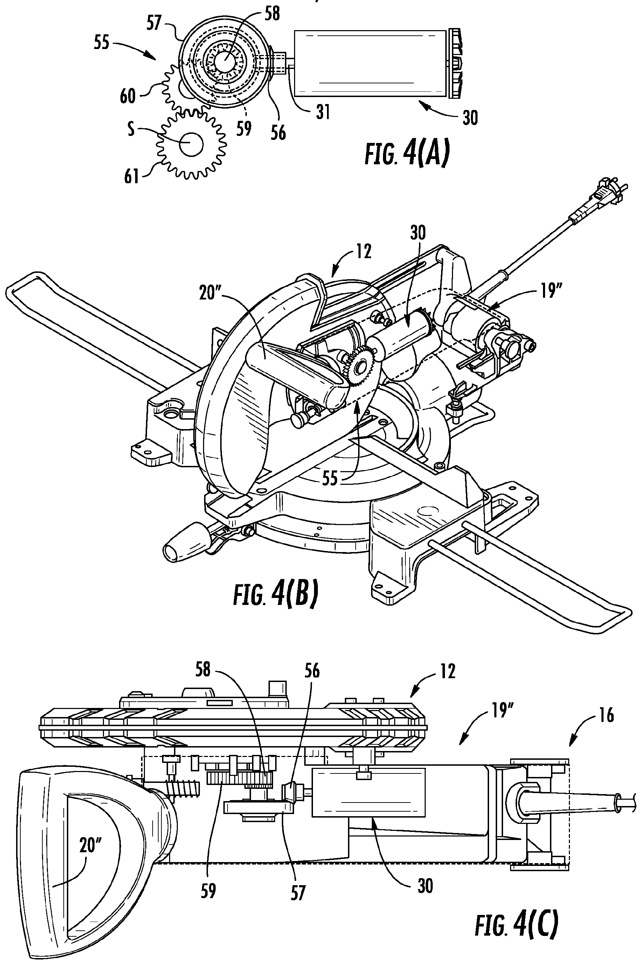

Another gear train **55** is shown in **FIG. 4(a)** that incorporates a pinion gear **56** engaged to the output shaft **31** of the BLDC motor **30.** The pinion gear meshes with the inboard face (i.e., facing the saw blade) of a bevel gear **57** which drives an idler gear **59** mounted on the bevel gear shaft **58.** The idler gear **59** drives an intermediate spur gear **60** which meshes with a drive gear **61** engaged to the drive shaft **S** of the saw blade.

The gear train **55** allows the BLDC motor **30** to be arranged nearly parallel to the housing **19".** as shown in **FIG. 4(b)**, rather than at an angle as in the embodiments of **FIGS. 2-3****.** As a consequence, the housing **19"** may have a reduced profile at the end coupled to the bevel mount **16**, with a more tubular shape. The modified configuration of the housing **19"** also permits a modification to the orientation of the handle assembly **20"** to accommodate an overhand grip by the operator, as shown in **FIG. 4(b)****.** Again, the final ratio of the gear train **55** may be adjusted by selection of the bevel and spur gears. In one embodiment, an 11 tooth pinion gear **56** meshes with a 38 tooth bevel gear **57.** An 18 tooth idler gear **59** drives an 11/22 tooth gear set **60, 61** to the drive shaft **S.**

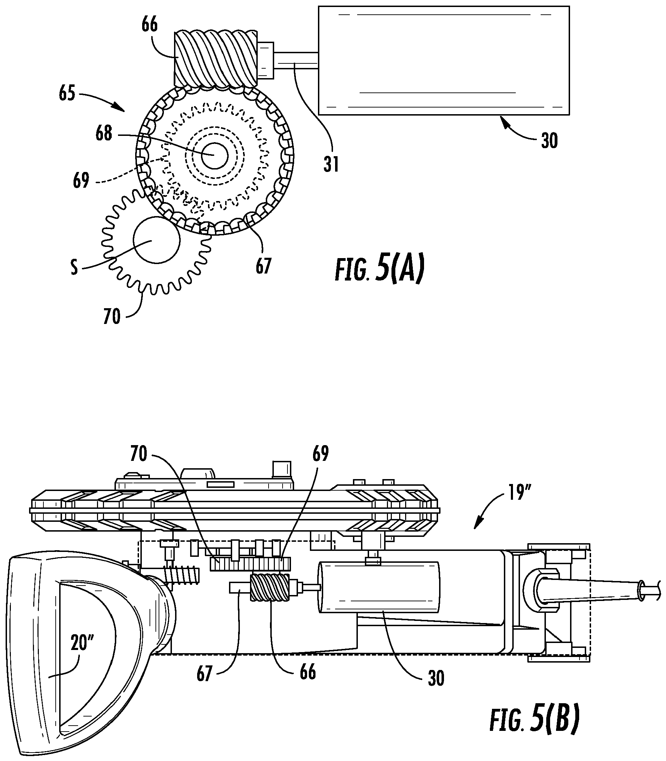

The gear train **65** of **FIG. 5(a)** incorporates a worm gear **66** mounted to the output shaft **31** of the BLDC motor **30.** The worm gear meshes with a spur gear **67** which shares an axle **68** with an idler gear **69.** The idler gear meshes with the drive gear **70** to drive the shaft **S** of the saw blade. Like the embodiment of **FIG. 4(a)**, the drive train **65** of **FIG. 5(a)** allows the motor to be oriented nearly parallel to the housing **19ii**, as shown in **FIG. 5(b)****.** The gear train **65** is slightly more compact laterally because the worm gear **66** resides directly above the spur gear **67.** A final gear ratio of 6.96:1 can be achieved in one embodiment with a worm gear **66** having 4 starts meshing with a 30 tooth spur gear **67.** The gear set **69/70** to the drive shaft **S** can have a 28/26 tooth ratio.

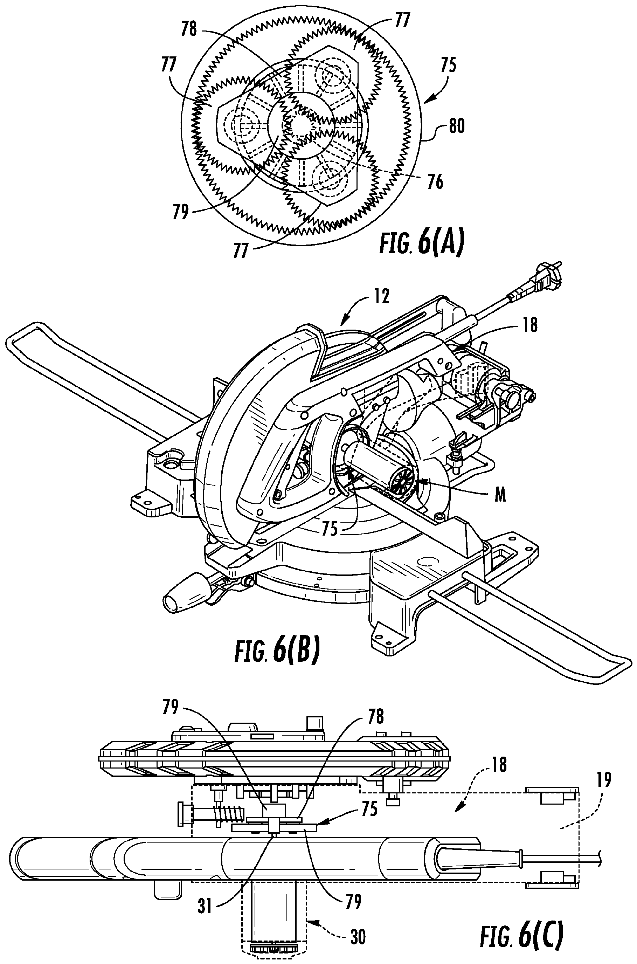

The reduced size of the BLDC motor **30** also provides a benefit for a laterally mounted motor, such as the arrangement shown in **FIGS. 6(b)****-(c).** Since the BLDC operating speed is typically less than is required for a power tool, such as a miter saw, a gear train **75** is provided that steps down the speed of the motor output shaft **31.** In order to maintain the alignment with the drive shaft for the saw blade, the gear train **75** is in the form of a planetary gear set as shown in **FIG. 6(a)****.** The sun or pinion gear **76** is mounted on the motor output shaft **31** and meshes with planetary gears **77** supported on a carrier **78.** The carrier includes a hub **79** projecting inward for engagement with the saw blade drive shaft. The planetary gears **77** revolve within a fixed ring gear **80** to multiply the pinion gear speed. In one specific embodiment, the pinion gear can have 12 teeth, the ring gear can have 72 teeth and the planetary gears can have 30 teeth to achieve a final ratio of 7.0:1. Although the BLDC motor **30** projects laterally from the arm assembly **18**, a comparison of **FIG. 6(c)** to **FIG. 1(c)** illustrates the significantly reduced profile achieved by the BLDC motor. In addition to a smaller envelop, the lower weight of the BLDC motor provides improved inertia characteristics, making the arm easier to move in a precise, controlled fashion.

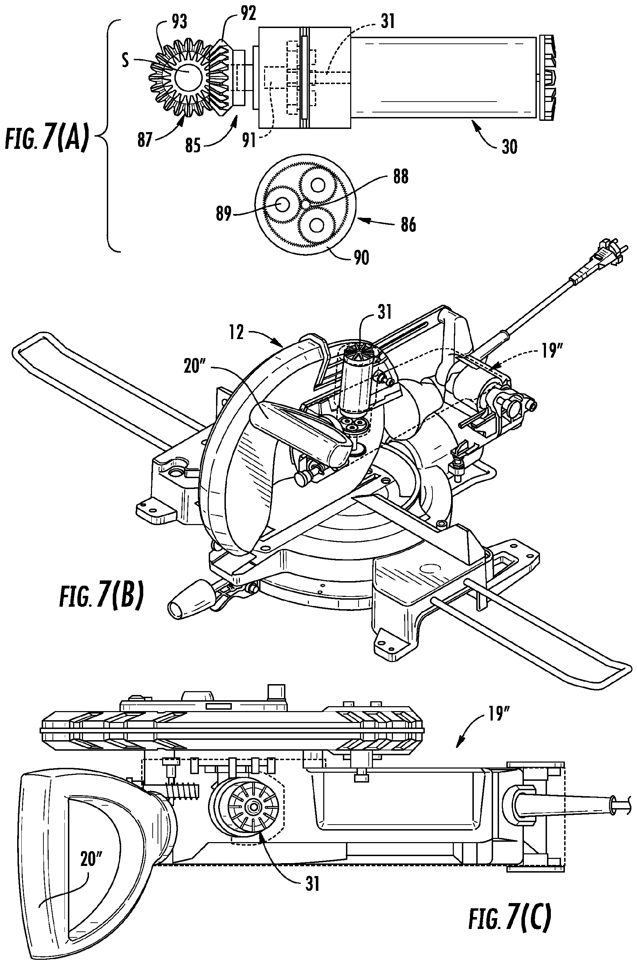

The planetary gear arrangement may be implemented in a vertically mounted concept, such as shown in **FIGS. 7(b)****-(c).** The gear train **85** shown in **FIG. 7(a)** includes a planetary set **86** that drives a right angle bevel set **87** to power the saw blade drive shaft **S.** The planetary set **86** includes a pinion gear **88** engaged to the output shaft **31** of the motor. The pinion gear meshes with planetary gears **89** which rotate within a fixed ring gear **90.** The planetary gears are supported by a carrier **91** which drives the bevel gear **92** of the bevel set **87.** The final bevel gear **93** is engaged to the shaft **S.** As can be appreciated from **FIG. 7(b)**, the small size of the BLDC motor **30** does not significantly alter the envelop of the power tool, since the BLDC motor does not project significantly above the top of the saw assembly **12.**

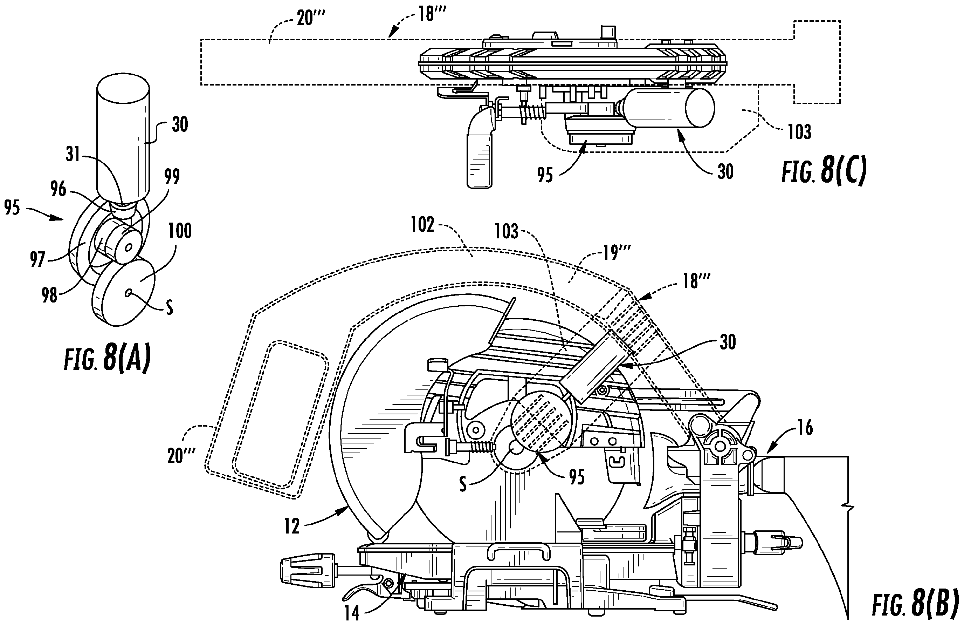

As previously indicated, the BLDC motor **30** allows modifications to the arm assembly for a power tool that cannot be achieved with the traditional AC motor **M** shown in **FIG. 1****.** Consequently, in one embodiment according to the invention, a modified arm assembly 18ⁱⁱⁱ shown in **FIG. 8(b)** is provided on a power tool in which the arm housing **19ⁱⁱⁱ** is an exaggerated C-shape from its engagement to the bevel mount **16** to the handle **20ⁱⁱⁱ.** The housing **19ⁱⁱⁱ** includes a drive motor housing **103** that projects inwardly from the C-shaped housing **19ⁱⁱⁱ** toward the fan blade shaft S. According to the invention, and as shown in **FIG. 8(c)** the arm assembly **18ⁱⁱⁱ** is arranged directly above and in line with saw assembly **12**, with the drive motor housing **103** laterally offset from the arm housing **19ⁱⁱⁱ.** This alignment of the saw assembly and arm assembly eliminates any torquing that might occur with an arm assembly that is laterally offset from the saw blade. Instead, the line of action of the force applied by the operator to the handle **20ⁱⁱⁱ** is transmitted directly with no moment to the saw assembly **12.** In addition, the inline arrangement makes the power tool well-suited for either left-handed or right-handed use, and provides maximum workpiece visibility from both sides of the saw assembly **12.**

In order to accommodate the modified arm assembly **18ⁱⁱⁱ** a drive train **95** is provided as shown in **FIG. 8(a)****.** According to the invention, the drive train includes a pinion gear **96** mounted to the output shaft **31** of the motor **30** that meshes with a bevel gear **97.** The bevel gear includes a central hub **98** that supports a spur gear **99** which then meshes with a spur gear **100** engaged to the drive shaft S of the saw blade. As shown in **FIG. 8(b)**, the drive train **95** can be aligned along the axis of the motor housing **103**, generally perpendicular to the modified arm housing **19ⁱⁱⁱ.** A final gear ratio of 6.91:1 can be achieved by a bevel gear set of 11/38 teeth and a spur gear set of 11/22 teeth.

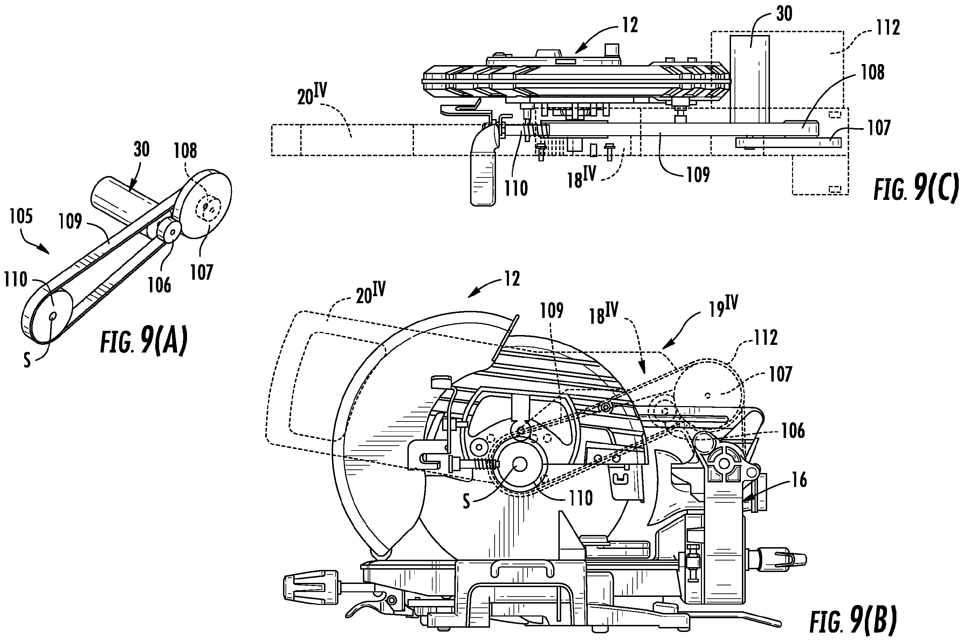

The small size of the BLDC motor **30** also allows the motor to be positioned farther away from the tool operator to minimize the noise near the operator. As shown in **FIGS. 9****(b-(c)**, a modified arm assembly **18^{iv}** includes a housing **19^{iv}** and handle **20^{iv}** that are similar to the housing **19ⁱ** and handle **20ⁱ** shown in **FIG. 2(b)** except that the drive motor **30** is supported in a housing **112** at the rear of the arm assembly, adjacent the bevel mount **16.** This rearrangement of the drive motor is achieved by the drive train **105** shown in **FIG. 9(a)** that includes a belt **109.** In particular, the drive train **105** includes a spur gear **106** driven by the motor **30** and which meshes with a spur gear **107.** The spur gear **107** includes a pulley wheel **108** that drives a belt **109** to rotate another pulley wheel **110** connected to the saw blade shaft **S.** The pulleys and belt may be a friction drive or may incorporate teeth to prevent belt slip. As shown in **FIG. 9(a)** the spur gear **106** may be positioned inside the belt **109** to reduce the overall length of the drive train **105.**

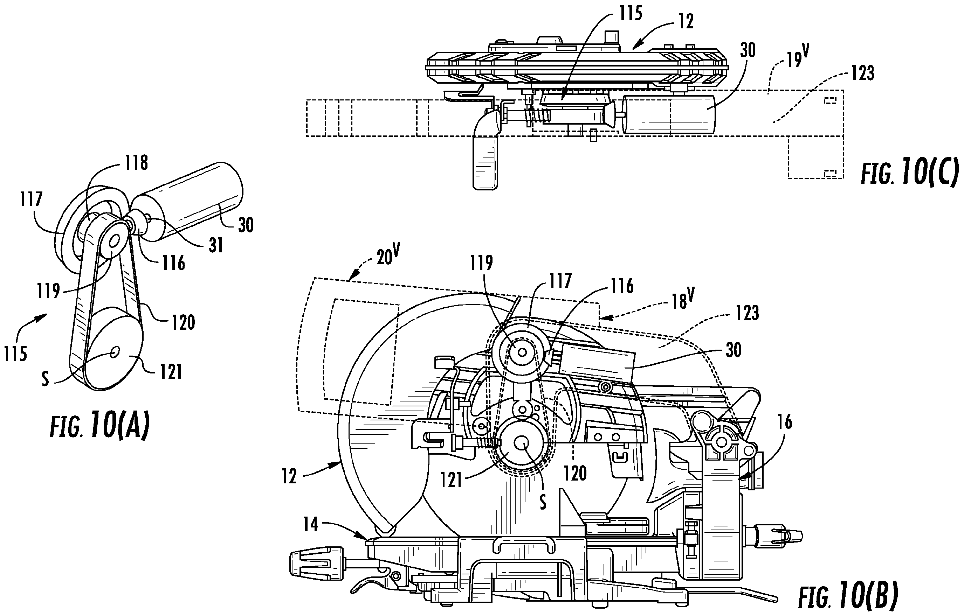

As opposed to the in-line arrangement of the drive train **105**, the belt configuration may be implemented in an angle drive train **115** shown in **FIG. 10(a)****.** The drive train **115** includes a pinion gear **116** engaged to the motor output shaft **31** and which meshes with a bevel gear **117.** The bevel gear includes a pulley wheel **119** mounted to a hub **118** of the bevel gear. The pulley wheel **119** drives a belt **120** that in turn drives an opposite pulley wheel **121** coupled to the drive shaft **S.** As shown in **FIGS. 10(a)****-(b)**, the drive train **115** may assume a near right angle between the BLDC motor **30** and the driven pulley wheel **121.** The arm assembly **18^{v}** includes a motor housing **123** that carries the drive train and engages the bevel mount **16.** As shown in the top view of **FIG. 10(c)** the drive train **115** fits into a narrow width so that the arm assembly housing **19^{v}** presents a narrow lateral profile.

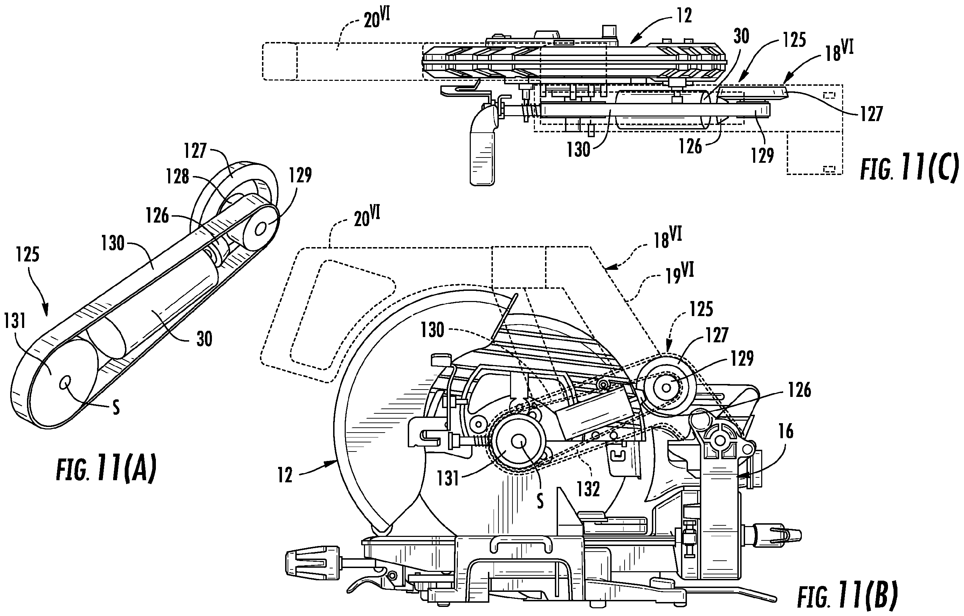

In an alternative approach, a drive train **125** positions the BLDC motor **30** entirely inside the drive belt. Thus, as shown in **FIG. 11(a)** the motor drives a pinion gear **126** that meshes with a bevel gear **127.** The bevel gear includes a hub **128** that carries a pulley wheel **129.** The belt **130** is engaged between the pulley wheel **129** and an opposite pulley wheel **131** that is engaged to the drive shaft S. Due to the small size of the BLDC motor, it fits snugly within the belt **130.** The drive train **125** thus allows for another alternative arm assembly **18^{vi}** that includes a housing **19^{vi}** in the form of a vertical beam extending from the bevel mount **16.** The modified handle **20^{vi}** is offset from the housing **19^{vi}** to be positioned directly above and in line with the saw assembly **12**, as shown in **FIGS. 11b****)-(c).** The drive train **125** is disposed within a housing portion **132** that extends from the housing **19^{vi}** to the drive shaft **S** of the saw blade. The drive trains **115** and **125** that combine the bevel gear set and belt drive set can have a final gear ratio of 6.91:1, with an 11/38 tooth bevel gear set and a 2:1 belt reduction between the opposite pulley wheels.

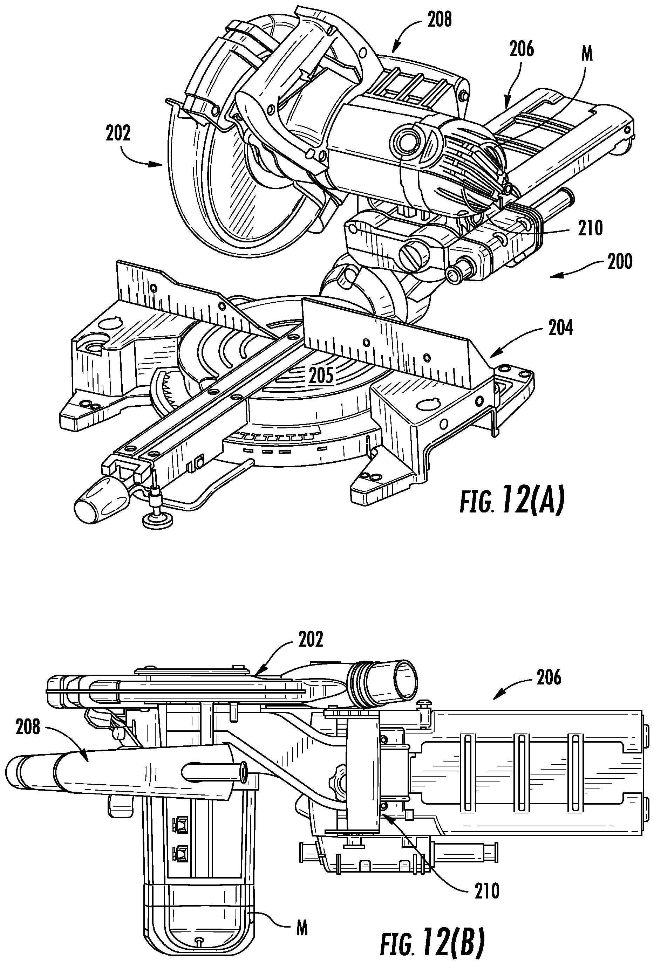

A brushless motor such as the BLDC **30** described above can be used to the benefit of other types of tools, such as the sliding miter saw **200** shown in **FIGS. 12(a)****-(b).** The saw **200** includes a saw assembly **202** supported by a slide assembly **206** on a base assembly **204** so that the saw assembly can translate across the working surface **205** of the base assembly. An arm assembly **208** supports the saw assembly on a bevel mount **210** that is slidably supported on the slide assembly **206** and is configured to allow the saw assembly to be oriented at a non-perpendicular angle relative to the work surface. As with the power tool **10,** the power tool **200** includes a motor M that projects laterally from the arm assembly **208** across the work surface. Thus, the power tool **200** suffers from the same drawbacks associated with the bulky and heavy conventional universal AC motor.

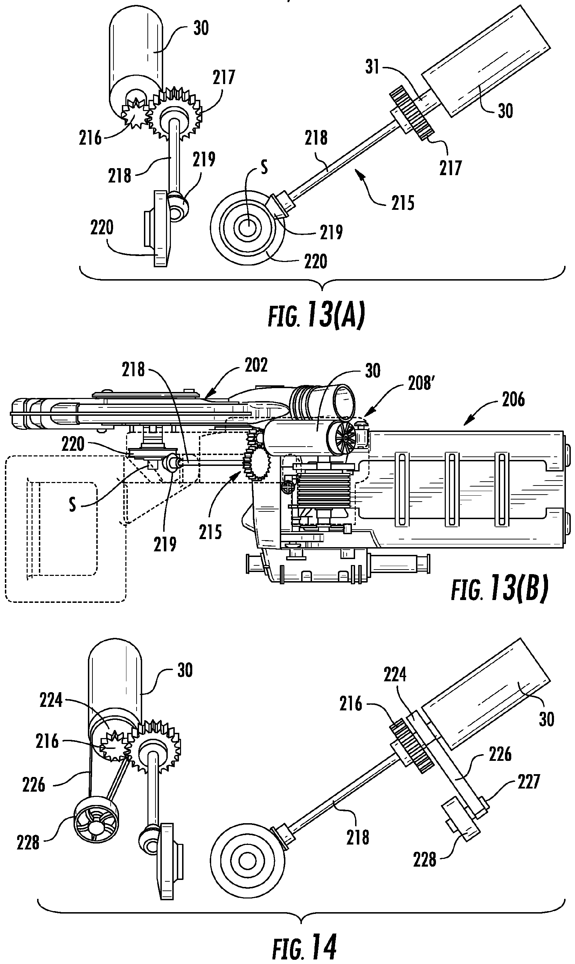

The BLDC motor **30** may be incorporated into a drive train **215** disposed within a modified arm assembly **208ⁱ,** as shown in **FIGS. 13(a)****-(b).** The drive train includes a spur gear **216** mounted to the output shaft **31** of the motor and in meshed engagement with a spur gear **217.** The spur gear **217** includes an elongated shaft that is sized to extend from a motor position at the back of the arm assembly **208i** to a position adjacent the drive shaft **S** of the saw blade. A pinion gear **219** is engaged to the end of the shaft **218** and is in meshed engagement with a bevel gear **220** that drives the shaft **S.** As seen in the top view of **FIG. 13(b)** replacing the conventional motor with the BLDC **30** provides a more compact package for the power tool.

The drive train **215** may be modified as shown in **FIG. 14** to incorporate a cooling fan **228.** In particular, a pulley wheel **224** may be engaged to the output shaft of the BLDC motor **30** inboard of the spur gear **26.** The pulley wheel **224** drives a belt **226** that engages an opposite pulley wheel **227** to spin the fan **228.** The pulley wheels **224, 227** can be sized to achieve a desired fan speed relative to the output speed of the BLDC motor **30.**

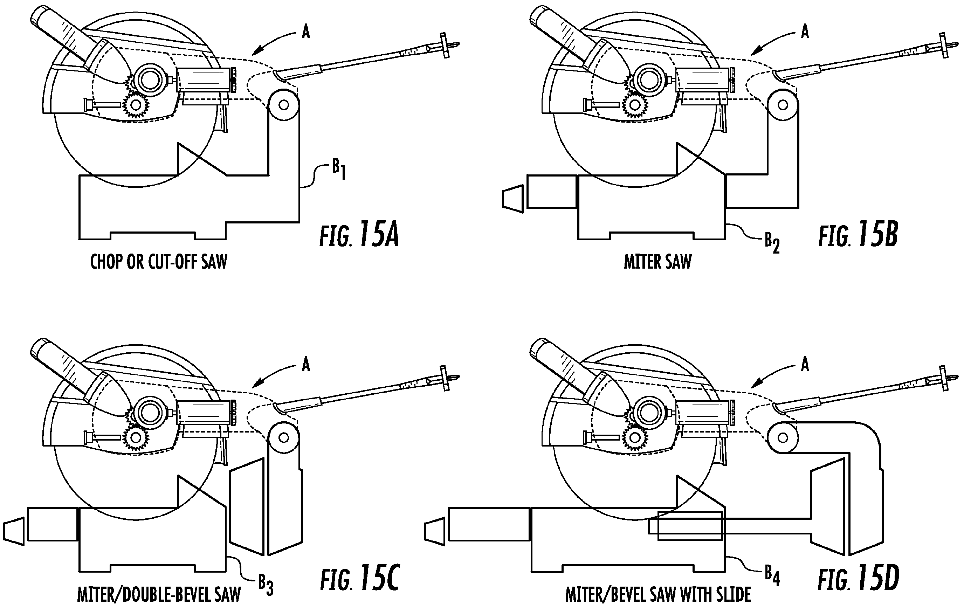

It is contemplated that the arm assemblies and drive trains discussed herein can be part of a modular assembly that can be integrated into a variety of miter saws. For instance, as shown in **FIG. 15****,** an arm assembly **A,** which may be like the arm assembly **19"** and gear train **55** shown in **FIGS. 4(a)****-(c),** may be mounted to the base and mount assemblies **B₁ - B₄** for several different types of miter saws. Likewise, the arm assembly may support different saw assemblies.

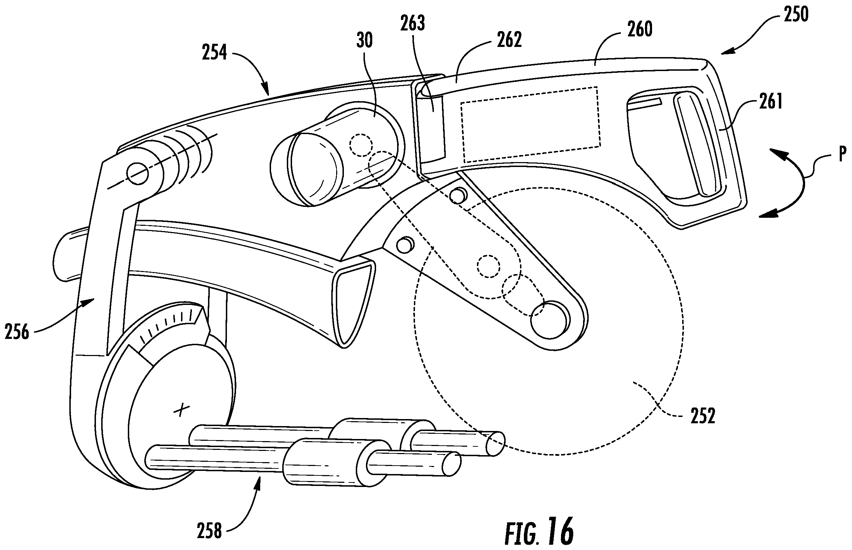

As previously discussed, the use of the BLDC **30** permits modifications to a power tool that cannot be achieved using the conventional AC motor. Thus, as shown in **FIG. 16** a power tool **250** includes a saw blade **252** carried by an arm assembly **254** that is supported for angular adjustment and slide movement by a bevel mount **256** and a slide assembly **258.** The arm assembly **254** may support a BLDC motor **30** laterally, as depicted in **FIG. 15**, or within the arm assembly housing using one of the drive trains described herein. The tool **250** incorporates a handle assembly **260** that allows the handle to be swiveled left or right, as indicated by the arrow **P.** The handle assembly thus includes a housing **261** that forms a handle grip at one end and that includes a pivot portion **262** at the opposite end. The pivot portion engages a pivot mount **263** on the arm assembly **254** so that the housing can be manually swung from side-to-side. This handle assembly **260** thus allows the tool operator to find a comfortable gripping position for performing the cutting operation.

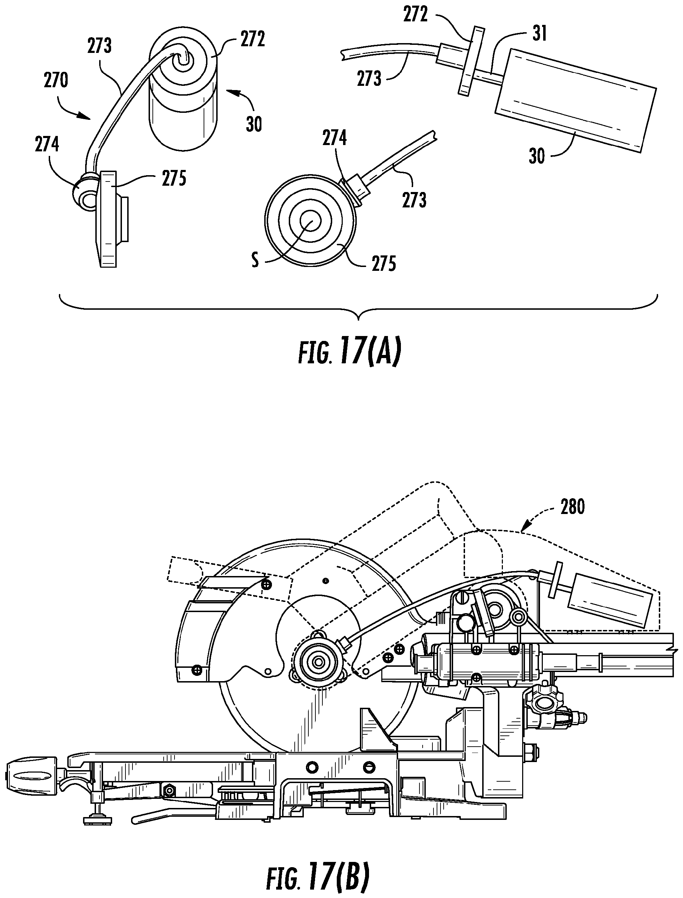

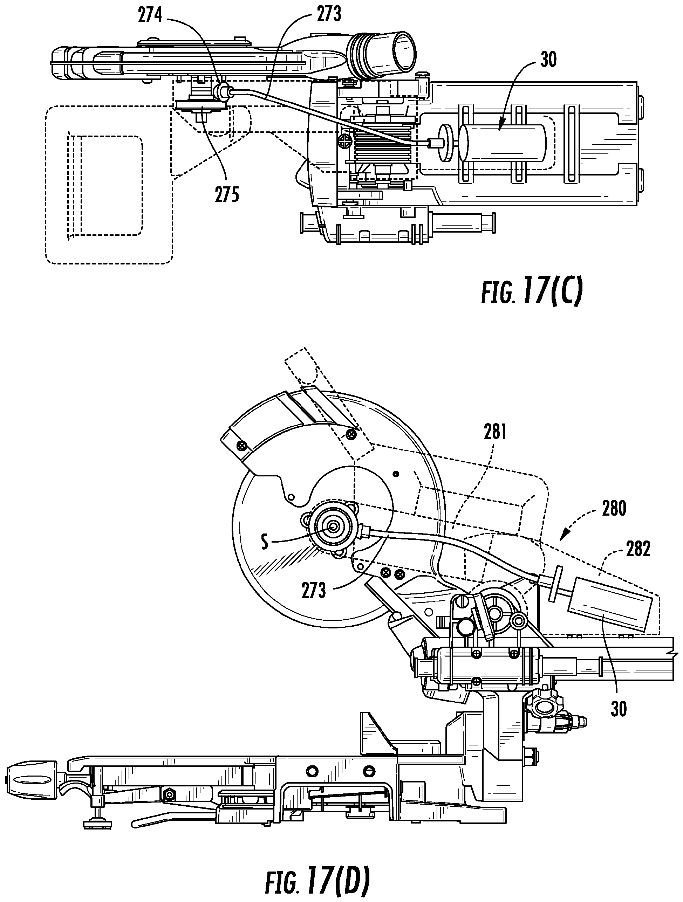

The compactness of the BLDC motor also allows the use of a flexible drive shaft. For instance, as shown in **FIGS. 17(a)****-(c)** a drive train **270** includes a hub **272** mounted to the output shaft **31** of a BLDC motor **30**, with a flexible shaft **273** engaged to the hub. A pinion gear **274** is fixed at the end of the flexible shaft to mesh with a bevel gear **275** that drives the saw blade shaft **S.** As shown in the side and top views of **FIGS. 17(b)****-(c),** the flexible shaft allows the motor **30** to be offset from the remainder of the drive train, which permits an arm assembly **280** that is more compact. In addition, the use of the flexible shaft **273** allows the motor **30** to be disposed in a fixed portion **282** of the arm assembly while the flexible shaft **273** extends through a movable portion **281** of the assembly, as depicted in **FIG. 17(d)****.**

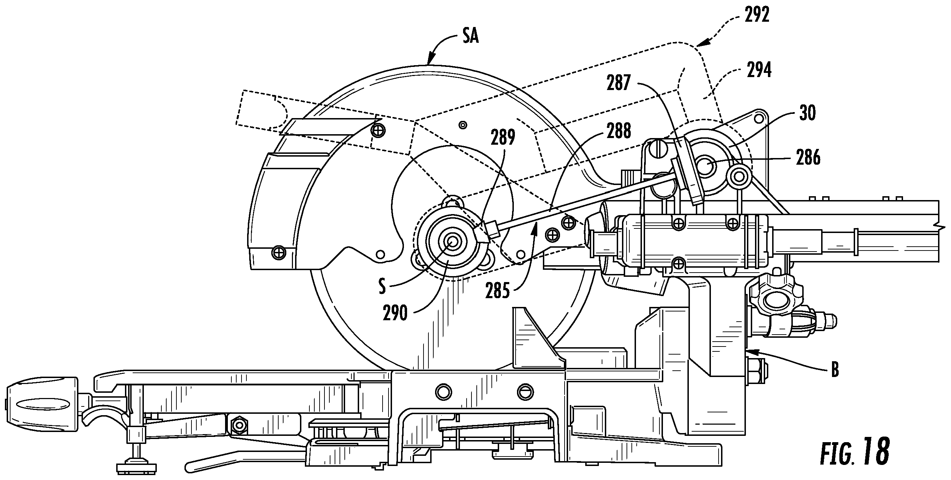

The BLDC motor **30** may also be oriented directly on a pivot axis for an arm assembly in a power tool. For instance, as shown in **FIG. 18**, an arm assembly **292** carries a saw assembly **SA.** The arm assembly includes a pivot hub **294** that is pivotably mounted to a base and mount assembly **B.** The drive motor **30** may be aligned along the pivot axis within the pivot hub **284.** The drive train 285 includes a pinion and bevel gear arrangement **286/287** that drives a shaft **288** that extends between the pivot axis and the drive shaft S of the saw blade. A pinion and bevel gear arrangement **289/290** at the end of the shaft **288** transmits power to the blade shaft S.

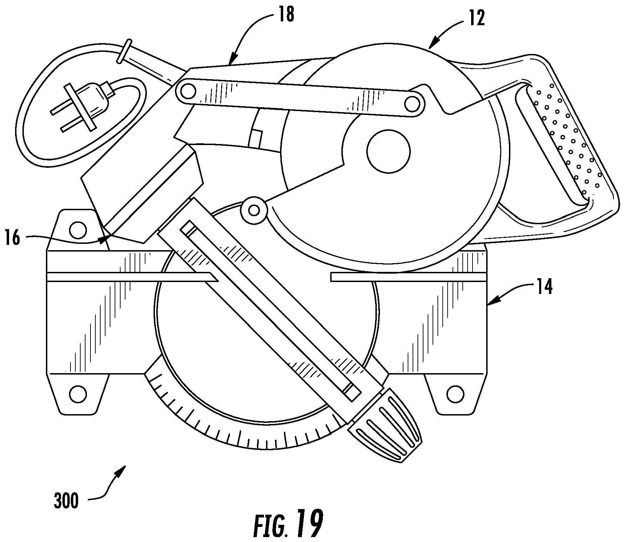

The reduced size of the BLDC motor also allows an entire miter saw to be folded into a compact configuration. Thus, as depicted in **FIG. 19** a miter saw including a saw assembly **12,** base assembly **14,** mount assembly **16** and arm assembly **18** can be folded to fit within a carry case **300.** Since the drive motor **30** is encased within the arm assembly in most of the above embodiments, the arm assembly can be pivoted to a "fold flat" position on top of the base assembly **14.**

While the invention has been illustrated and described in detail in the drawings and foregoing description, the same should be considered as illustrative and not restrictive in character. It is understood that only the preferred embodiments have been presented and that the invention also comprises all changes, modifications and further applications that fall within the scope of the appended claims.

## Claims

1. A miter saw (10), comprising:
a base assembly (14);
a saw assembly (12) including a saw blade having a drive shaft (S), wherein the saw assembly (12) is supported on the base assembly (14) by a bevel mount (16);
an arm assembly (18"') connecting the saw assembly (12) to the bevel mount (16), the arm assembly including an arm housing (19"') and a handle (20"') that can be grasped by an operator to control the movement of the saw assembly (12) when performing a cut, wherein the arm housing (19"') has an exaggerated C-shape from its engagement to the bevel mount (16) to the handle (20'");
a drive motor housing (103) projecting inwardly from the C-shaped housing (19"') towards the drive shaft (S), wherein the arm assembly (18'") is arranged directly above and in line with the saw assembly (12), with the drive motor housing (103) laterally offset from the arm housing (19'");
a brushless DC, BLDC, motor (30) having an output shaft (31) and being mounted within said motor housing (103) and
a drive train (95) mounted within said motor housing (103), wherein said drive train (95) operably connects the output shaft (31) of the BLDC motor (30) to said drive shaft (S), wherein the drive train (95) includes a pinion gear (96) mounted to the output shaft (31) of the BLDC motor (30) that meshes with a bevel gear (97), and wherein the bevel gear includes a central hub (98) that supports a spur gear (99) which then meshes with a spur gear (100) engaged to the drive shaft (S) of the saw blade.

2. The miter saw of claim 1, wherein:
said saw blade has an operating speed;
said BLDC motor (30) has a no-load speed less than said operating speed; and
said drive train (95) has a drive ratio corresponding to the ratio of the saw blade operating speed to the BLDC no-load speed.

3. The miter saw of claim 1, wherein the output shaft (31) of said BLDC motor (30) extends beyond opposite ends of the motor (30), one end of the drive shaft (S) connected to said drive train (95) and the opposite end of the drive shaft (S) carrying a rotary fan.

4. The miter saw of claim 1, wherein the drive train (95) is aligned along an axis of the motor housing (103) generally perpendicular to the arm housing (19"').

## Patentansprüche

1. Gehrungssäge (10), umfassend:
eine Basisanordnung (14);
eine Sägenanordnung (12) umfassend ein Sägeblatt mit einer Antriebswelle (S), wobei die Sägenanordnung (12) an der Basisanordnung (14) durch eine Gehrungshalterung (16) getragen ist;
eine Armanordnung (18'''), die die Sägeanordnung (12) mit der Gehrungshalterung (16) verbindet, wobei die Armanordnung ein Armgehäuse (19"') und einen Griff (20''') umfasst, der durch einen Bediener gegriffen werden kann, um die Bewegung der Sägeanordnung (12) bei Ausführen eines Schnittes zu steuern, wobei das Armgehäuse (19''') eine übersteigerte C-Form von ihrem Eingriff mit der Gehrungshalterung (16) zu dem Griff (20''') aufweist;
ein Antriebsmotorgehäuse (103), das von dem C-förmigen Gehäuse (19''') nach innen hin zu der Antriebswelle (S) ragt, wobei die Armanordnung (18''') direkt über und fluchtend mit der Sägeanordnung (12) angeordnet ist, wobei das Antriebsmotorgehäuse (103) seitlich von dem Armgehäuse (19"') versetzt ist;
einen bürstenlosen Gleichstrommotor, BLDC (brushless DC), (30), der eine Abtriebswelle (31) aufweist und in dem Motorgehäuse (103) gehalten ist, und
einen in dem Motorgehäuse (103) gehaltenen Antriebsstrang (95), wobei der Antriebsstrang (95) die Abtriebswelle (31) des BLDC-Motors (30) mit der Antriebswelle (S) wirkverbindet, wobei der Antriebsstrang (95) ein Ritzel (96) umfasst, das an der Abtriebswelle (31) des BLDC-Motors (30) gehalten ist, das in ein Kegelrad (97) eingreift, und wobei das Kegelrad eine zentrale Nabe (98) umfasst, die ein Stirnrad (99) stützt, das dann in ein Stirnrad (100) eingreift, das mit der Antriebswelle (S) des Sägeblatts in Eingriff ist.

2. Gehrungssäge nach Anspruch 1, wobei:
das Sägeblatt eine Betriebsdrehzahl aufweist;
der BLDC-Motor (30) eine Leerlaufdrehzahl aufweist, die kleiner als die Betriebsdrehzahl ist; und
der Antriebsstrang (95) ein Übersetzungsverhältnis aufweist, das dem Verhältnis der Betriebsdrehzahl des Sägeblatts zu der Leerlaufdrehzahl des BLDC entspricht.

3. Gehrungssäge nach Anspruch 1, wobei sich die Abtriebswelle (31) des BLDC-Motors (30) über entgegengesetzte Enden des Motors (30) hinaus erstreckt, wobei ein Ende der Antriebswelle (S) mit dem Antriebsstrang (95) verbunden ist und das entgegengesetzte Ende der Antriebswelle (S) einen Radiallüfter trägt.

4. Gehrungssäge nach Anspruch 1, wobei der Antriebsstrang (95) entlang einer Achse des Motorgehäuses (103) im Allgemeinen im rechten Winkel zu dem Armgehäuse (19"') ausgerichtet ist.

## Revendications

1. Scie à onglets (10) comprenant :
un ensemble de base (14) ;
un ensemble scie (12) incluant une lame de scie ayant un arbre d'entraînement (S), dans laquelle l'ensemble scie (12) est supporté sur l'ensemble de base (14) par une monture en biseau (16) ;
un ensemble bras (18''') raccordant l'ensemble scie (12) à la monture en biseau (16), l'ensemble bras incluant un boîtier de bras (19"') et une poignée (20''') qui peut être saisie par un opérateur pour commander le mouvement de l'ensemble scie (12) pendant l'exécution d'une coupe, dans laquelle le boîtier de bras (19''') présente une forme de C exagérée de sa prise sur la monture en biseau (16) à la poignée (20"') ;
un carter de moteur d'entraînement (103) se projetant vers l'intérieur depuis le boîtier en forme de C (19''') en direction de l'arbre d'entraînement (S), dans laquelle l'ensemble bras (18''') est disposé directement au-dessus et aligné avec l'ensemble scie (12), le carter de moteur d'entraînement (103) étant décalé latéralement par rapport au boîtier de bras (19"') ;
un moteur à courant continu sans balai, BLDC (30), ayant un arbre de sortie (31) et étant monté à l'intérieur dudit carter de moteur (103) et
une transmission (95) montée à l'intérieur dudit carter de moteur (103), dans laquelle ladite transmission (95) raccorde en fonctionnement l'arbre de sortie (31) du moteur BLDC (30) audit arbre d'entraînement (S), dans laquelle la transmission (95) comprend un engrenage à pignons (96) monté sur l'arbre de sortie (31) du moteur BLDC (30) qui s'engrène avec un engrenage conique (97), et dans laquelle l'engrenage conique comprend un moyeu central (98) qui supporte un engrenage cylindrique (99) qui s'engrène alors avec un engrenage cylindrique (100) en prise sur l'arbre d'entraînement (S) de la lame de scie.

2. Scie à onglets selon la revendication 1, dans laquelle :
ladite lame de scie a une vitesse de fonctionnement ;
ledit moteur BLDC (30) a une vitesse à vide inférieure à ladite vitesse de fonctionnement ; et
ladite transmission (95) a un rapport d'entraînement correspondant au rapport de la vitesse de fonctionnement de la lame de scie à la vitesse à vide du moteur BLDC.

3. Scie à onglets selon la revendication 1, dans laquelle l'arbre de sortie (31) dudit moteur BLDC (30) s'étend au-delà des extrémités opposées du moteur (30), une extrémité de l'arbre d'entraînement (S) étant raccordée à ladite transmission (95) et l'extrémité opposée de l'arbre d'entraînement (S) portant un ventilateur rotatif.

4. Scie à onglets selon la revendication 1, dans laquelle la transmission (95) est alignée le long d'un axe du carter de moteur (103) généralement perpendiculaire au boîtier de bras (19''').
